(19) Europäisches Patentamt
European Patent Office
Office européen des brevets

(11) **EP 3 191 969 B1**

(12) **EUROPEAN PATENT SPECIFICATION**

(45) Date of publication and mention
of the grant of the patent:
**11.11.2020 Bulletin 2020/46**

(51) Int Cl.:
***G06F 13/14*** *(2006.01)*     ***G06F 13/38*** *(2006.01)*
***G06F 13/40*** *(2006.01)*     ***G06F 13/42*** *(2006.01)*

(21) Application number: **14901804.6**

(22) Date of filing: **24.12.2014**

(86) International application number:
**PCT/US2014/072389**

(87) International publication number:
**WO 2016/039791 (17.03.2016 Gazette 2016/11)**

(54) **SERIAL SIDEBAND SIGNALING LINK**

SERIELLE SEITENBANDSIGNALIERUNGSVERBINDUNG

LIAISON DE SIGNALISATION DE BANDE LATÉRALE EN SÉRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2014 MY PI2014702585**

(43) Date of publication of application:
**19.07.2017 Bulletin 2017/29**

(73) Proprietor: **Intel Corporation
Santa Clara, CA 95054 (US)**

(72) Inventors:
• **PETHE, Akshay**
**Hillsboro, OR 97124 (US)**
• **WAGH, Mahesh**
**Portland, Oregon 97229 (US)**
• **HARRIMAN, David**
**Portland, OR 97210 (US)**
• **LIM, Su Wei**
**Klang 41200 (MY)**
• **DAS SHARMA, Debendra**
**Saratoga, California 95070 (US)**
• **FROELICH, Daniel**
**Portland, Oregon 97225 (US)**
• **IYER, Venkatraman**
**Round Rock, Texas 78681 (US)**
• **JAUSSI, James**
**El Dorado Hills, CA 95762 (US)**
• **WU, Zuoguo**
**San Jose, California 95138 (US)**

(74) Representative: **Samson & Partner Patentanwälte
mbB et al
Widenmayerstraße 6
80538 München (DE)**

(56) References cited:
**WO-A1-2008/154144     US-A1- 2010 312 942
US-A1- 2011 296 216     US-A1- 2011 296 216
US-A1- 2012 191 887     US-A1- 2013 007 489
US-A1- 2014 006 670**

• **Revision: "Universal Serial Bus Type-C Cable and
Connector Specification", , 11 August 2014
(2014-08-11), XP055271614, Retrieved from the
Internet:
URL:http://www.those.ch/designtechnik/wp-c
ontent/uploads/2014/08/USB-Type-C-Specific
ation-Release-1.0.pdf**

## Description

### Technical Field

This disclosure relates generally to sideband signaling. Specifically, this disclosure relates to a serial sideband signaling link.

### Background

In today's computing industry, signaling link technologies may have a main signaling link and be associated with sideband signals that are not configured to propagate over the main signaling link. Sideband link input/output (I/O) technologies provide a way for a sideband signal to be provided from one component within a computing device to another component without being propagated on the main signaling link. For example, in Peripheral Component Interconnect Express (PCIe) main signaling link technology, sideband signals may be propagated through a number of different sideband I/OP technologies such as a Card Electromechanical (CEM) sideband link, a mini CEM, a System Management Bus (SMBus), and the like. However, many times motherboard manufacturers may desire to modify existing sideband technologies by using glue logic. Glue logic, as referred to herein, is one or more custom logic modifications made to a sideband signaling link. In some cases, glue logic is difficult to implement with existing sideband I/O technologies as design and operation of these technologies may be sophisticated in comparison to the glue logic.

The present invention is defined by the appended claims.

### Brief Description of the Drawings

Fig. 1 illustrates a block diagram of serial sideband links between an upstream port and a downstream port;
Fig 2 illustrates a number of scenarios where a serial sideband link consolidates sideband signals;
Fig. 3 is a diagram illustrating timing of an asynchronous handshake;
Fig. 4 is a diagram illustrating various packet formats of the serial sideband link;
Fig. 5 is a diagram illustrating a profile negotiation packet;
Fig. 6 is a diagram illustrating an example packet format for a CEM profile;
Fig. 7A and Fig. 7B are diagrams illustrating profile negotiation on the serial sideband link;
Fig. 8 is a diagram illustrating a serial bit stream of the serial sideband link;
Fig. 9 is a diagram illustrating a packet exchange on the serial sideband link;
Fig. 10 is a diagram illustrating a sample implementation of a serial sideband link module;
Fig. 11 is a diagram illustrating pulse width modulation (PWM) encoding used in the serial sideband link;
Fig. 12 is a diagram illustrating a cascaded switch hierarchy implemented with serial sideband links;
Fig. 13 is diagram illustrating a retimer within a serial sideband link that is configurable by the serial sideband link;
Fig. 14 is a diagram illustrating transitions of a Link Training and Status State Machine (LTSSM) indicated on the serial sideband link;
Fig. 15 is diagram illustrating a retimer within a serial sideband link that is configurable by the serial sideband link;
Fig. 16 are diagrams illustrating various ways in which the serial sideband signaling may be arranged in a daisy chain fashion; and
Fig. 17 is a block diagram illustrating a method of serial sideband link signaling.

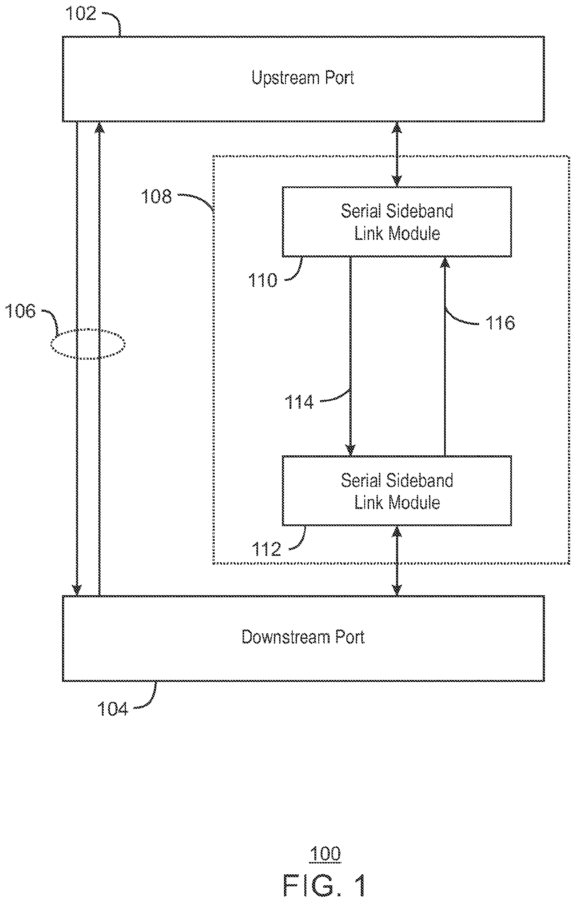

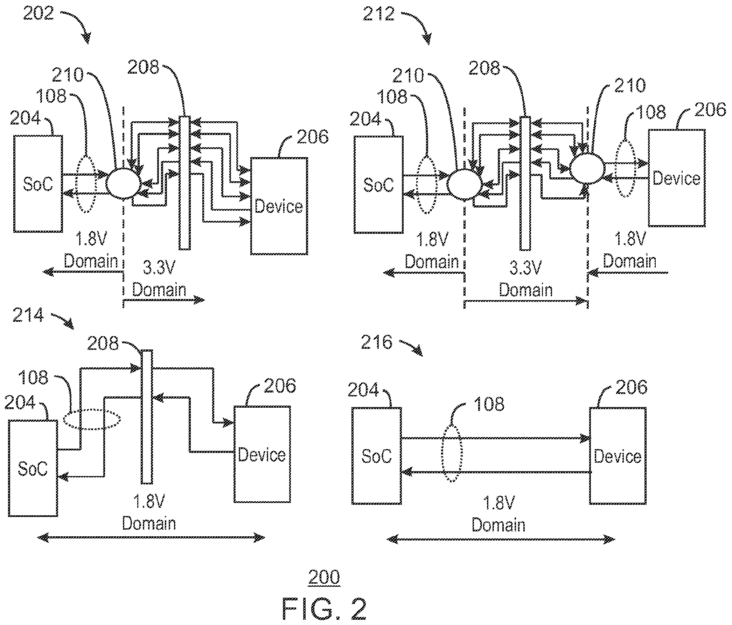

In some cases, the same numbers are used throughout the disclosure and the figures to reference like components and features. Numbers in the 100 series refer to features originally found in Fig. 1; numbers in the 200 series refer to features originally found in Fig. 2; and so on.

### Description of the Embodiments

The techniques described herein include a serial sideband link. The serial sideband link includes a first serial sideband link module configured to propagate signals in one direction, and a second serial sideband link module configured to propagate signals in another direction. In embodiments, the serial sideband link may be used to consolidate other sideband link I/O technologies, such as CEM, Mini CEM, and the like, into a single serial sideband link, thereby potentially reducing pin count on any given connected components. The serial sideband link may also enable a scalable number of sideband signals to be added without adding pin count.

Fig. 1 illustrates a block diagram of serial sideband links between an upstream port and a downstream port.

An upstream port 102 may be communicatively coupled to a downstream port 104 via a main signaling link 106. Sideband signals may be propagated over a serial sideband signaling link 108. As illustrated in Fig. 1, sideband signals may be propagated in one direction by a first serial sideband link module 110, and in an opposite direction by a second serial sideband link module 112.

For example, the main signaling link 106 may be a PCIe fabric, and sideband signals are propagated on the serial sideband signaling link 108. In embodiments, the downstream port 104 is a controller, such as a system on chip (SoC), and the upstream port 102 may be a device, such as an expansion card communicatively coupled to a SoC.

In any case, the first serial sideband link module 110 is to propagate signals from the upstream port 102 to the downstream port 104 on a first signaling lane 114. The second serial sideband link module 112 is to propagate signals from the downstream port 104 to the upstream port 102 via a second signaling lane 116.

Fig 2 illustrates a number of scenarios where a serial sideband link consolidates sideband signals. At 202, a SoC 204 is communicatively coupled to a device 206 through the serial sideband link 108. However, rather than being directly connected, the device 206 may be connected to one or more sideband link I/O technologies via a connector 208. The connector 208 may be a connecter associated with sideband link technologies such as CEM, mini CEM, SMBus, and the like. In other words, the serial sideband link 108 is backwards compatible to other legacy sideband technologies, as well as any further sideband technologies. As indicated by the dashed line, the serial sideband link 108 may convert voltages to a 1.8 volt (V) domain that is compatible with the SoC 204 at glue logic 210. At 212, glue logic 210 may be disposed on either side of the connector 208, and the serial sideband link 108 may be used on either side of the glue logic 210.

In some cases, glue logic may not be used to connect the connector to the serial sideband link 108, as indicated at 214. In this scenario, the serial sideband link 108 may directly interface with the connector 208. In yet other cases, the serial sideband link 108 may communicatively couple the SoC 204 to the device 206 via integrated components of the serial sideband link 108 within the SoC 204 and the device 206, as indicated at 216.

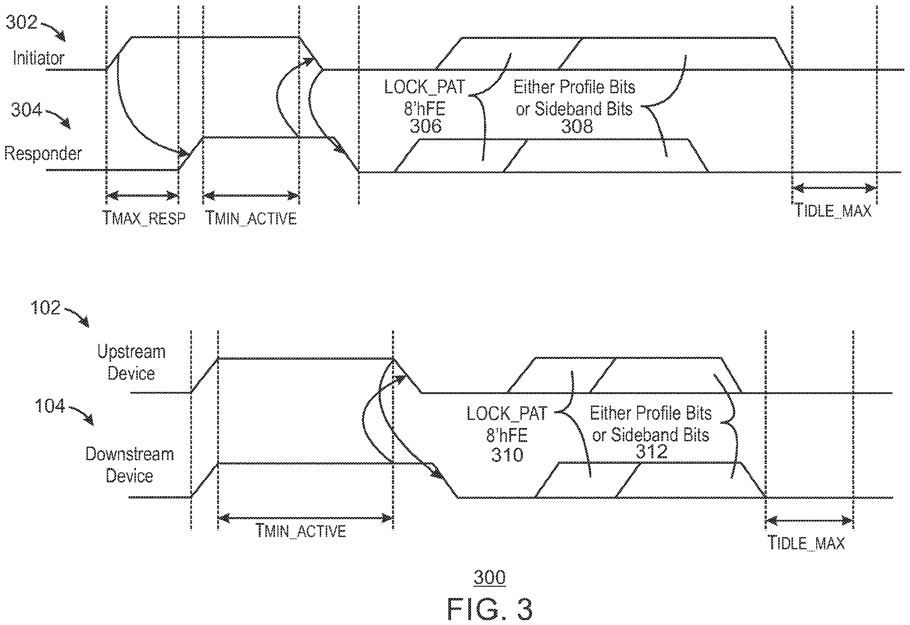

Fig. 3 is a diagram illustrating timing of an asynchronous handshake. The serial sideband link 108 may be in an idle state, and either side can be clock and/or power gated. An asynchronous handshake performed on either side of the link may be used to wake up a remote side. If either side is clock and/or power gated, this asynchronous handshake should be used to start the phase locked loops (PLLs) and establish stable power and clocks in order to correctly receive a serial bit stream on the serial sideband link 108.

As illustrated in Fig. 3, the side that initiates the asynchronous handshake may be referred to herein as an initiator, indicated at 302, and the side that receives the asynchronous handshake may be referred to herein as a responder, indicated at 304. The initiator 302 and the responder 304 may be either upstream ports, or downstream ports, such as the ports 102 and 104 discussed above in regard to Fig. 1.

The initiator 302 initiates the asynchronous handshake by asserting a sideband signal of a predetermined high voltage. The responder 304 acknowledges the start of the asynchronous handshake by asserting a sideband signal of the predetermined high voltage. The initiator 302 keeps the signal asserted for a first time period, indicated by $T_{MIN\_ACTIVE}$ in Fig. 3. Both the initiator 302 and the responder 304 are configured to de-assert their sideband signals any time after $T_{MIN\_ACTIVE}$. It is assumed that either side de-asserts their respective predetermined high voltage only when all required clocks are active and stable.

A byte value is transmitted using pulse width modulation (PWM) encoding to help the responder 304 recover a clock, as indicated at 306. In embodiments, the byte value is an 8 bit value, wherein the first seven bits are of a value of 1 and the last bit is of a value of 0. This simple value may enable relatively quick clock recovery. A profile negotiation, and/or a serial sideband signal packet may follow, as indicated at 308. If the serial sideband link is idle for a second time period, indicated by $T_{MAX\_IDLE}$ in Fig. 3 and a sideband packet has to be transmitted, then the asynchronous handshake is repeated.

In some scenarios, both sides may initiate a handshake simultaneously. In this case, an upstream port, such as the upstream port 102 of Fig. 1, and a downstream port, such as the downstream port 104 of Fig. 1, initiate the handshake by asserting the predetermined high voltage on the serial sideband link associated with each port, respectively. Both ports 102 and 104 keep the signal asserted for $T_{MIN\_ACTIVE}$. Both the downstream port 104 and the upstream port 102 are configured to de-assert their sideband signals any time after $T_{MIN\_ACTIVE}$. It is assumed that either side de-asserts only when all the clocks of the respective port are active and stable in either separate reference clock or common clock configurations.

A byte value is transmitted using PWM encoding to help either side recover a clock, as indicated at 310. In embodiments, the byte value is an 8 bit value, wherein the first seven bits are of a value of 1 and the last bit is of a value of 0. A profile negotiation, and/or a serial sideband signal packet may follow, as indicated at 312. If the serial sideband link is idle for a second time period, indicated by $T_{MAX\_IDLE}$ in Fig. 3 and a sideband packet is to be transmitted, then the asynchronous handshake is repeated.

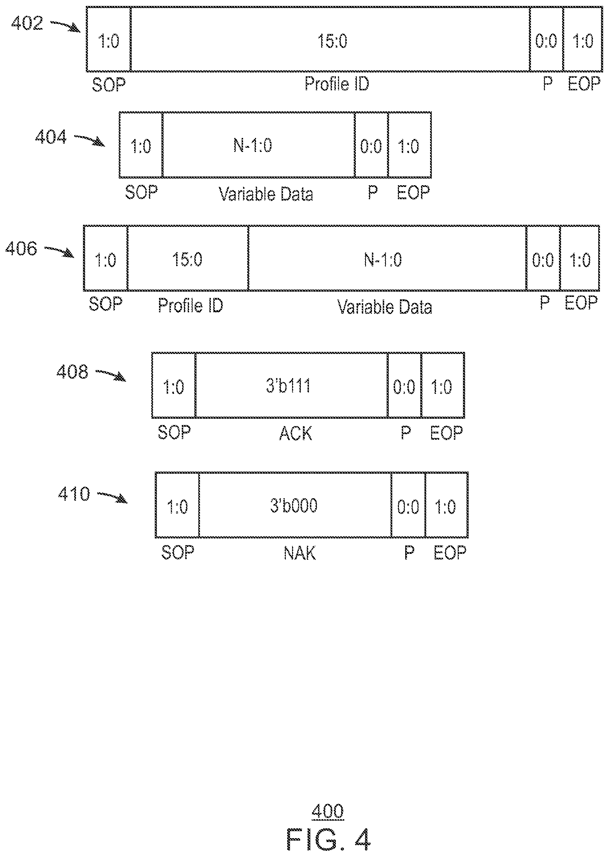

Fig. 4 is a diagram illustrating various packet formats of the serial sideband link. The various packet formats include a profile negotiation 402, sideband signals for a fixed profile 404, sideband signals for a dynamic profile 406, an acknowledgement (ACK) packet 408, a non-acknowledgement (NAK) packet 410, and the like. The packet format fields may be indicated in Table 1 below:

Table 1

| Field Name | Description |
|---|---|
| SOP | Start of Packet (2'b10) |
| PROFILE ID | 16 bit profile register indication support for or the selected profile |
| P | Odd parity bit for the entire packet excluding SOP and EOP |
| EOP | End of Packet (2'b01) |

In some scenarios, the asynchronous handshake, as discussed above, may be used during power on reset, hot plug events, and the like. A hot plug event may also include a hot unplug event. Hot plug and hot unplug events include adding or removing components, such as an upstream port 102 of an expansion card, from connection with a downstream port 104 without prior indication. In these scenarios, an asynchronous handshake may be performed, and a profile negotiation may follow, as discussed in more detail below. If either side does not support certain bits in a given profile, they are to be ignored by the receiving side.

The serial sideband link 108 may be configured to perform a profile negotiation every time there is a hot plug event, state changes, or any combination thereof. In these circumstances, a profile negotiation is performed following the very first asynchronous handshake after these events.

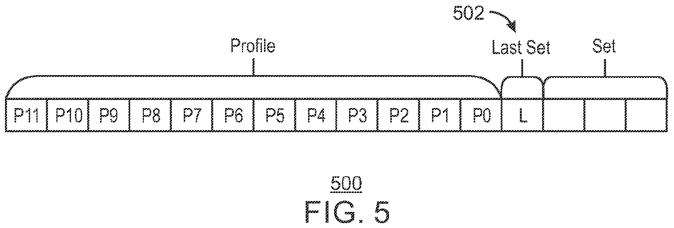

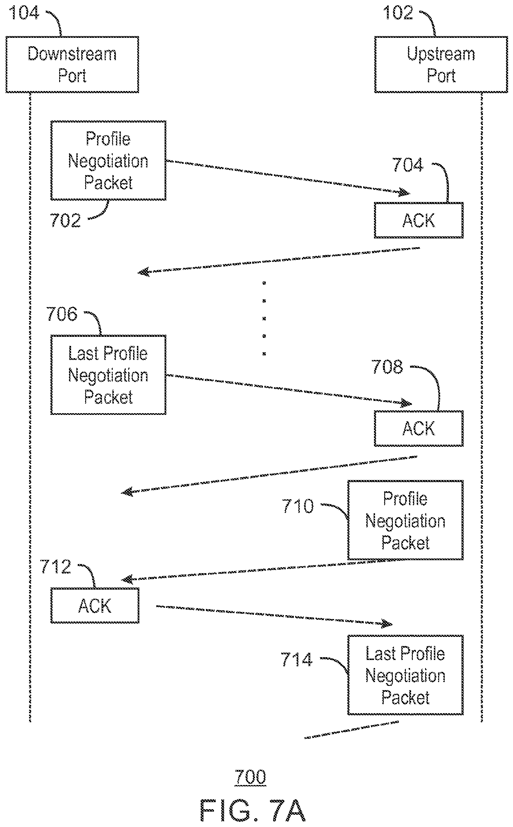

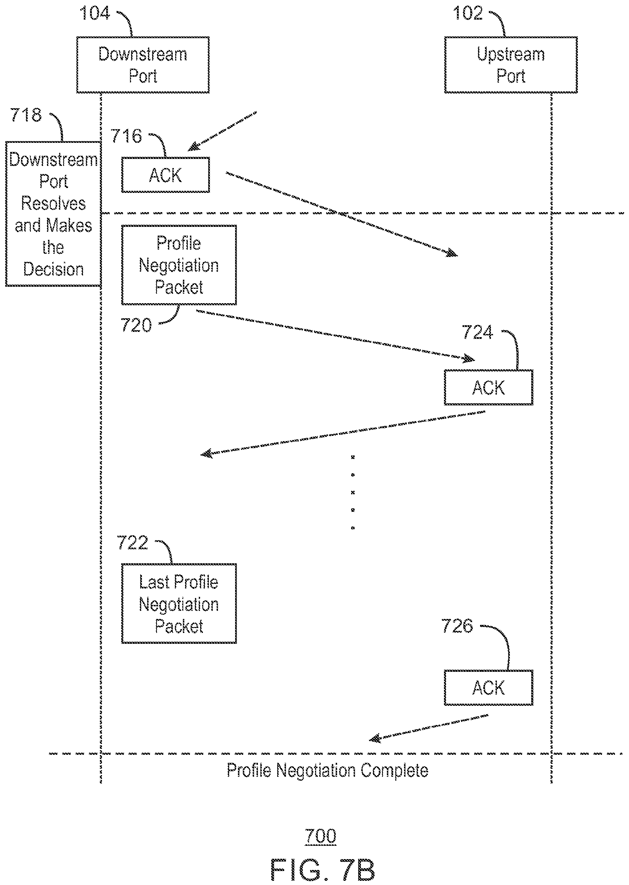

Fig. 5 is a diagram illustrating a profile negotiation packet. Each end of the serial sideband link, such as the serial sideband link 108 of Fig. 1, is configured to maintain a 16 bit register indicating support for various profiles that may be supported by each end. Profiles are used to enable operation across various use cases such as different form factors, I/O technologies, SoC designs, and the like. Each profile defines a certain set of sideband signals. The one or more profiles to be used during serial sideband link operation may be negotiated only once during initialization out of reset. The profile negotiation is discussed below in regard to Fig. 7A and Fig. 7B.

As illustrated in Fig. 5, the profile negotiation packet may also include an "L" value indicating whether a port is transmitting a last profile of a plurality of profiles supported, indicated at 502. An example of the fields in the register is indicated in Table 2 below:

Table2

| Profile ID | Description |
|---|---|
| S0-P0 | CEM |
| S0-P1 | Mini CEM |
| S0-P2 | M.2 |
| S0-P3 | SFF |
| S0-P4 | Retimer |
| S0-P5 to S0-P15 S1-Px to S7-Px | Reserved |

As illustrated in Table 2, existing sideband link I/O technologies may be identified in the profile register of the serial sideband link 108. In embodiments, the identification is performed by logic of the one or more of the serial sideband link modules 110 and 112, discussed above with regard to Fig. 1. As further illustrated in Table 2, the serial sideband link techniques discussed herein may be scalable to add additional sideband link I/O technologies in profile ID fields 6-15.

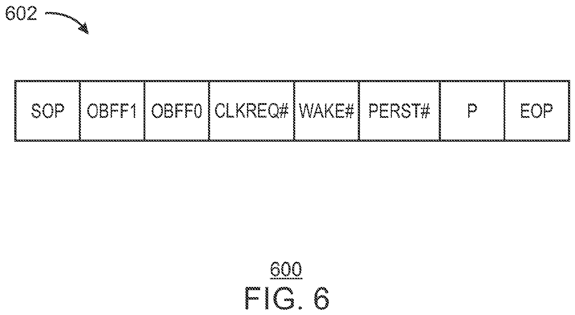

Fig. 6 is a diagram illustrating an example packet format for a CEM profile. As discussed above in regard to Fig. 5, existing sideband link I/O technologies may be identified by the serial sideband link 108. For example, the serial sideband link 108 of Fig. 1 may identify CEM as an existing sideband link technology communicatively coupled to the serial sideband link 108. The CEM may use Optimized Buffer Flush/Fill (OBFF) toggle mechanisms of a single pin. The serial sideband link 108 may, via a serial sideband link module 110, 112, encode any signals from the CEM such that CEM information is sent as a 2 bit code across the serial sideband link 108.

A packet format 602 of the serial sideband link 108 is illustrated in Fig. 6. The CEM profile details may be illustrated by Table 3 below:

Table 3

| Serial Bits | D2U_P0 | U2D_P0 | Description |
|---|---|---|---|
| b0 | OBFF bit 1 | - | 4 OBFF messages encoded in a binary code |
| b1 | OBFF bit 0 | - | |
| b2 | CLKREQ# | CLKREQ# | Clock request |
| b3 | | WAKE# | Wake signal |
| b4 | PERST# | - | Fundamental Reset |

As illustrated in Table 3, OBFF messages have been encoded as a 2 bit code instead of relying on rising and falling edges. Different values in the profile bits may lead to different number of bits causing different sideband signals to be propagated on the serial sideband link 108.

Fig. 7A and Fig. 7B are diagrams illustrating profile negotiation on the serial sideband link. As discussed above, after the asynchronous handshake, a profile negotiation may occur. The profile negotiation determines the one or more profiles available at each port, such as the upstream port 102 and the downstream port 104 of Fig. 1. The profile determination defines the sideband signals in the packets that are exchanged. The profile negotiation takes place immediately following a byte value, such as the byte value 306, propagated as discussed above in regard to Fig. 3.

As illustrated in Fig. 7A, a downstream port, such as the downstream port 104 of Fig. 1, sends a profile negotiation packet with a value of 1 set in all the profiles that it supports, as indicated at 702. The packet is received at an upstream port, such as the upstream port 102 of Fig. 1. The upstream port 102 transmits an acknowledgement (ACK) packet, as indicated at 704, upon successfully receiving a profile negotiation packet.

In some embodiments, the downstream port 104 may be configured to refrain from transmitting another profile negotiation packet until it receives an ACK packet for the last profile negotiation packet it has transmitted at 702. If the downstream port 104 receives a non-acknowledgement (NAK) packet, or after two milliseconds, the same profile negotiation packet will be retransmitted.

In some cases, the downstream port 104 is configured to transmit a value of 0 in an "L" field, such the L field indicated in Fig. 5. The downstream port 104 is configured to transmit the value of 1 in the L field if there are more sets to be transmitted. The downstream port 104 sets a value of 1 in field L field it is transmitting a final profile of a plurality of profiles supported by the downstream port 104, as indicated at 706.

After receiving the final profile of the plurality of profiles from the downstream port 104, the upstream port may be configured to transit an ACK packet as indicated at 708. The upstream port 102 may be further configured to transmit a profile negotiation packet, as indicated at 710, indicating one or more profiles supported by the upstream port 102. At 712, the downstream port 104 may be configured to send an ACK packet. Similar to the downstream port 104, the upstream port may be configured to send a plurality of profile negotiation packets, wherein a value of 1 will indicate a last profile in supported by the upstream port 102, as indicated at 714.

The profile negotiation continues at Fig. 7B, wherein at 716, the downstream port 104 may be configured to send an ACK packet, upon receiving the last profile supported by the upstream port 102. The downstream port 104 may be configured to determine which profile, or profiles, to use for transmission, as indicated at 718. The downstream port 104 may transmit a profile negotiation packet at 720, or a plurality of profile negotiation packets until a last profile negotiation packet at 722, , with a value of 1 set only in those profiles which are to be used for the serial sideband link operation, whereupon the upstream port 102 is configured to transmit an ACK packet back to the downstream port, as indicated at 724 in the case of a single profile packet, or at 726 in the case of multiple profile packets transmitted from the downstream port 104.

Referring back to Fig. 5, the profile support package may be illustrated in Table 4 below:

Table 4

| Field | Description |
|---|---|
| b0-b2 | Set: <br> This 3 bit field defines 8 sets. Each set may have up to 12 profiles <br> SO-Active <br> S1-S7-Reserved |

(continued)

|  | Field | Description |
|---|---|---|
|  | b3 | Last Set:<br>This bit is used during profile negotiation. This bit does not have any meaning during any other part of the link operation.<br>If set this bit indicates that the current set being sent is the last set. |
|  | b4-b15 | Profile:<br>This 12 bit register is used to indicate<br>support for 12 different profiles. A value of 1 in any bit indicates support for that particular profile. More than 1 bit may be set to indicate support for multiple profiles.<br>For e.g.:<br>b4 - indicates support for profile P0 |

As illustrated in Table 4, a set of profiles may be identified in the 3 bit field defining 8 sets, and wherein each set may have up to 12 profiles.

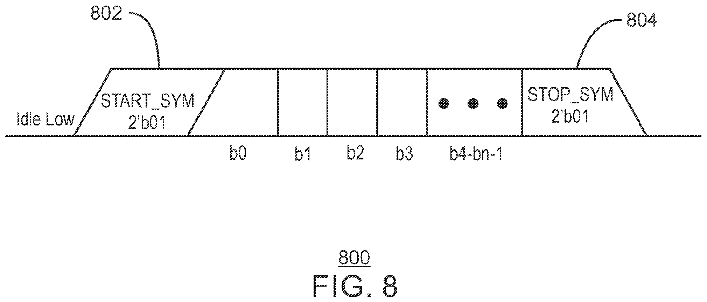

Fig. 8 is a diagram illustrating a serial bit stream of the serial sideband link. A serial sideband link, such as the serial sideband link 108 of Fig. 1, does not send a separate clock signal on the serial sideband link 108. This simplifies the signaling and enables for consolidation of sideband signaling technologies. Instead, PWM encoding is used to help with clock recovery and correct decoding of the bits. PWM encoding and PWM decoding require small hardware resources and may be more robust than signaling technologies requiring a forwarded clock, such as Non-Return to Zero (NRZ) encoding.

The serial sideband link 108 is idle when no signals are being sent. A start symbol, or start of packet (SOP), is sent to start the transmission followed by sideband signals having high latency sensitivity in comparison to other sideband signals. Based on the profile selected, some of the bits will have a predefined meaning. For example, the SOP may have a value of 2'b01, indicated at 802. The bits b0 to bn01 are then configured to have a predefined meaning. The packet may then end with a stop symbol with a value of 2'b10, as indicated at 804.

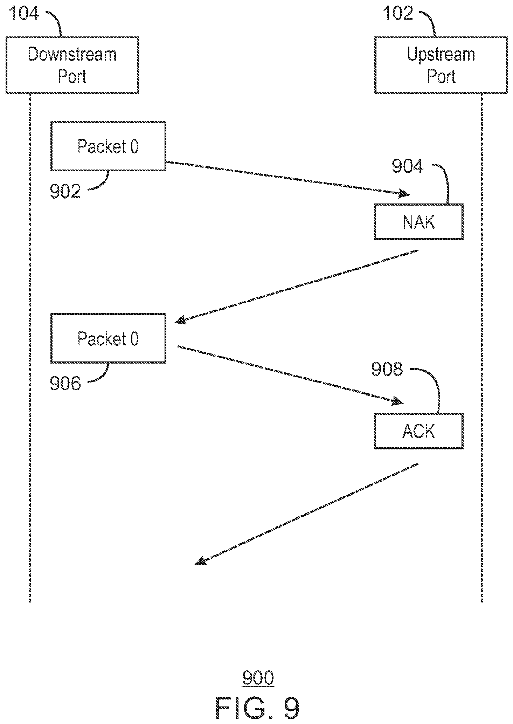

Fig. 9 is a diagram illustrating a packet exchange on the serial sideband link. In embodiments, to keep the serial sideband signals simple, yet reliable, a one bit parity bit included in each packet. This bit maintains an odd or even parity for the entire packet excluding the SOP and end of packet (EOP) fields. For example, if the parity bit is set to an odd parity, then if a receiving end receives a packet with a parity bit that is odd, the receiving end will send an acknowledgement (ACK) packet. If the receiving end received a parity bit that is even, the receiving end will receive a non-acknowledgement (NAK) packet back to the transmitting end. Upon receiving a NAK, the transmitting end will send a new packet with the latest value of serial sideband signals.

For example, a transmitting end may be a downstream port, such as the downstream port 104 of Fig. 1, and the receiving end may be an upstream port, such as the upstream port of Fig. 1. The downstream port 104 may send a packet 0 to the upstream port 102, as indicated at 902. If the parity value does not match a predetermined parity between the two ports, the upstream port will return a NAK packet, as indicated at 904. At 906, the downstream port 104 will send a new packet with the latest value of serial sideband signals to the upstream port 102. Upon determining a correct parity value, the upstream port 104 will send and ACK packet back to the downstream port 104.

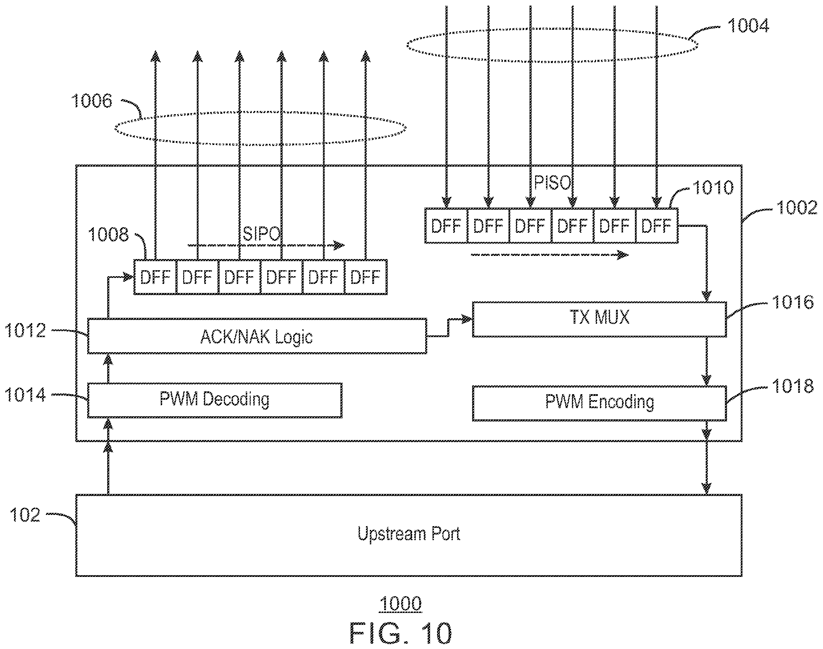

Fig. 10 is a diagram illustrating a sample implementation of a serial sideband link module. A serial sideband link module 1002 is configured to receive signals from an existing connector (now shown), as indicated at 1004, and transmit signals to the existing connector, as indicated at 1006. In this example illustration, the serial sideband link module 1002 is implemented having a Serial In Parallel Out (SIPO) architecture. The blocks 1008 and 1010 are electrical flops, or a latches, having two stable states. Block 1012 may include combinatorial logic, at least partially comprising hardware logic, configured to implement the ACK and NAK signaling discussed above in regard to Fig. 9.

As illustrated in Fig. 10, the serial sideband link module 1002 may have additional submodules including a PWM decoding module 1014, a transmission (TX) multiplexing (MUX) module 1016, and a PWM encoding module 1018. Each of the PWM decoding module 1014, the TX MUX module 1016, and the PWM decoding module 1018, may be implemented as a mix of both combinatorial logic and electrical flops or latches.

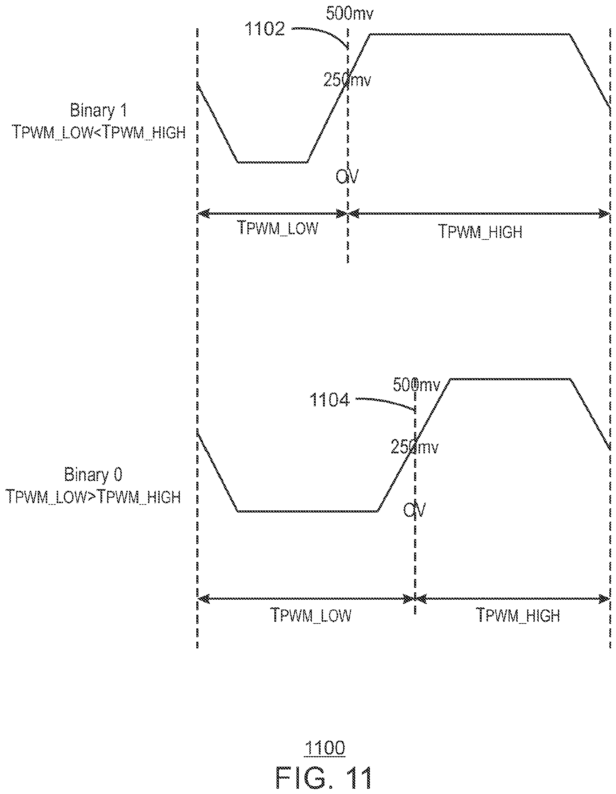

Fig. 11 is a diagram illustrating pulse width modulation (PWM) encoding used in the serial sideband link. As discussed in many references above, the techniques described herein include the use of PWM encoding to convey 1 bit using two logic levels. Depending on a ratio of widths of either logic level, a unit interval is decoded as either a 1 or a 0.

For example, each bit consists of two periods: a negative voltage period followed by a positive voltage period as illustrated in Fig. 11. A rising edge can either be at one-third of an interval, as indicated at the dashed line 1102, or at two-thirds of an interval, as indicated at the dashed line 1104. If the rising edge is at the one-third interval 1102, the bit period is encoded as a binary 1. If the rising edge is at the two-thirds interval 1104, then the bit period is encoded as a binary 0.

It may be important to note that PWM encoding described herein includes self-clocking properties. The rise time and fall time are defined as the time it takes for the signal to transition between about 20% and 80% signal levels of a differential output signal. Electrical parameters for PWM may be illustrated in Table 5 below:

Table 5

| Symbol | Min | Max | Description |
|--------|-----|-----|-------------|
| **Voltage(mV)** | | | |
| VFS_DC | 1200 | 1800 | Full Swing TX DC voltage with unterminated TX. |
| **Resistance($\Omega$)** | | | |
| R | 40 | 60 | Single ended output resistance. |
| **Bit Duration (us)** | | | |
| TPWM_BIT | 1/36 | 1/12 | PWM transmit bit duration |

In some cases, the serial sideband link described above is configured to operate at 19.2 MegaTransfers per second (MT/s). In this scenario, one unit interval will be 52 nanoseconds (ns). If the encode/decode logic is running a 100 Megahertz (MHz) clock, 1 clock cycle will be about 10 ns. Assuming one flop stage on the transmit side as well as the receive side, a total latency for encoding, transmitting, and decoding 1 bit may be about $T_{LAT\_BIT}$ defined in Equation 1 below:

$$T_{LAT\_BIT} = 52\,s + 20ns + propagation\,delay = 72\,ns + propagation\,delay$$

Eq. 1

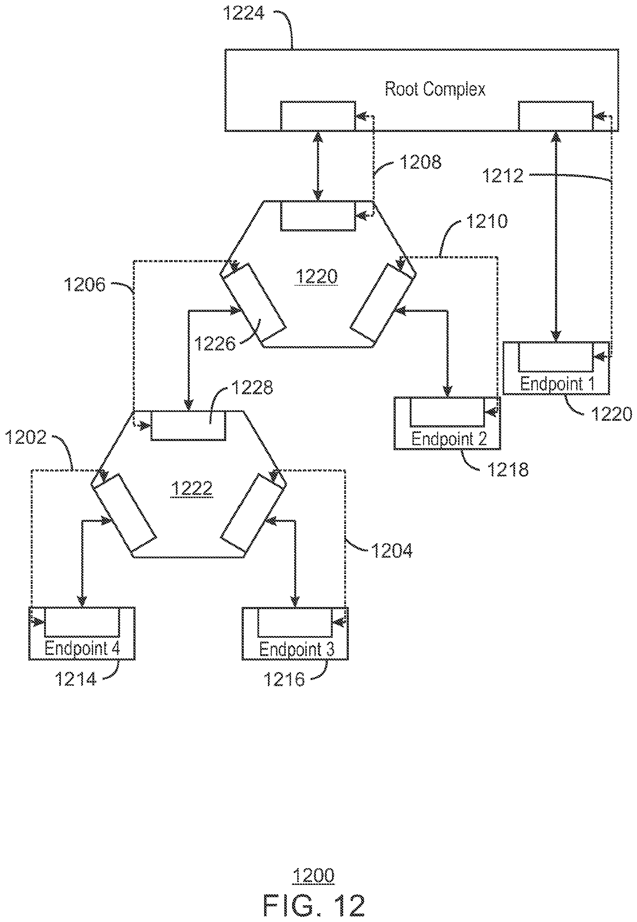

Fig. 12 is a diagram illustrating a cascaded switch hierarchy implemented with serial sideband links. Serial sideband links 1202, 1204, 1206, 1208, 1210, and 1212 are implemented between endpoints 1214, 1216, and 1218, as well as switches 1220 and 1222, and a root complex 1224 in a PCIe implementation.

During initial power on, a sideband link, such as any one of the serial sideband links 1202-1212, may be configured to initialize in a legacy mode where a signal lane from a downstream port and a signal lane from an upstream port are used propagate legacy PCIe packets. For example, a signal lane from a downstream port is used as PERST#, and the signal lane from an upstream port is used as CLKREQ#. A Basic Input Output System (BIOS) (not shown) or other software associated with the switch hierarchy illustrated in Fig. 12 may be configured to detect support for the serial sideband links 1202-1212 and enable them. The BIOS may be configured to detect the serial sideband link capability from a configuration bit for example. As a Link Training and Status State Machine (LTSSM) associated with the hierarchy goes to Detect, Disabled, L1, L2, or after power on reset the asynchronous handshake for the serial sideband link described above is performed. In some scenarios, profile negotiation is performed in Detect and after power on reset.

In the example illustration of Fig. 12, an asynchronous handshake between endpoint 1214 and switch 1222 triggers a handshake between an upstream port 1228 of switch 1222 and a downstream port 1226 of switch 1220. The handshake triggered between the switch 1220 and the switch 1222 may then trigger an asynchronous handshake between the switch 1220 and the root complex 1224 if information needs to be conveyed upstream. Latencies for transmitting OBFF messages may equal to the sum of latencies for each link.

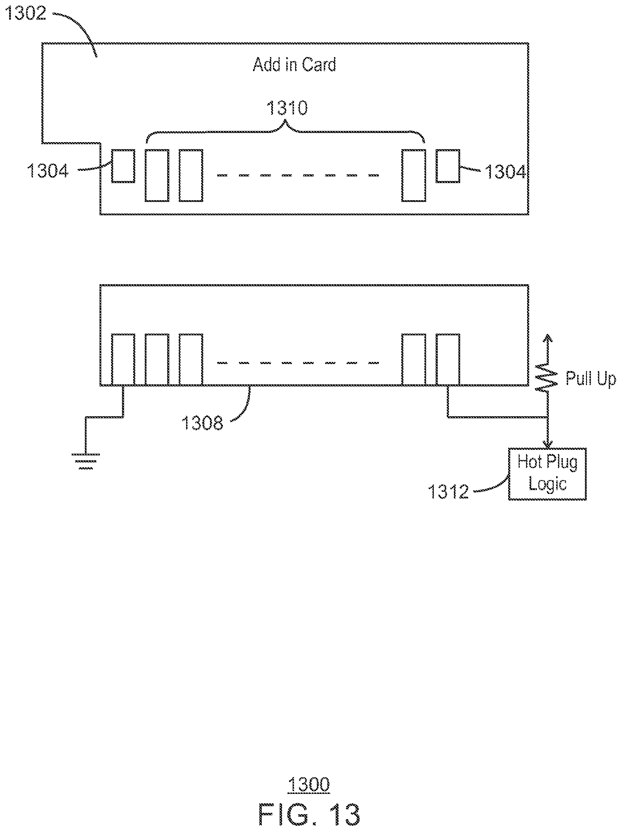

Fig. 13 is a diagram illustrating an add-in card (AIC) having pins for serial sideband signaling. An AIC 1302 may have physical pins 1304 and 1306 operable to propagate serial sideband signals. An add-in card, or AIC, as referred to herein, is an expansion component configured to add functionality to a computing system when received at a system board connector 1308. An asynchronous handshake, as discussed above, may indicate a presence of a logical entity like the AIC 1302 at the other end of a link.

In some cases, the AIC 1302 may be susceptible to hot plug and unplug events discussed above in regard to Fig 4. In the embodiments described herein, the pins 1304 and 1306 may be shorter than main band signaling pins indicated at 1310. In this case, the pins 1304 and 1306 of the serial sideband signaling are the last to come into physical contact with pins of the system board connector 1308 when the AIC 1302 is physically plugged into the system board connector 1308. Further, when the AIC 1302 is physically removed the pins 1304 and 1306 associated with serial sideband signaling are the first to be removed from the pins of the system board connector 1308. This may be useful to hot plug and unplug logic 1312 of a computing system of which the system board connector 1308 is associated. Specifically, when the pins 1304 and 1306 are physically received at the system board connector 1308 in a hot plug event, the main band pins 1310 are more likely to have already been physically received at the system board connector 1308, and the main band signaling can commence. Likewise, during a hot unplug event, removal may preemptively indicate that a hot unplug event has occurred and main band signaling should cease.

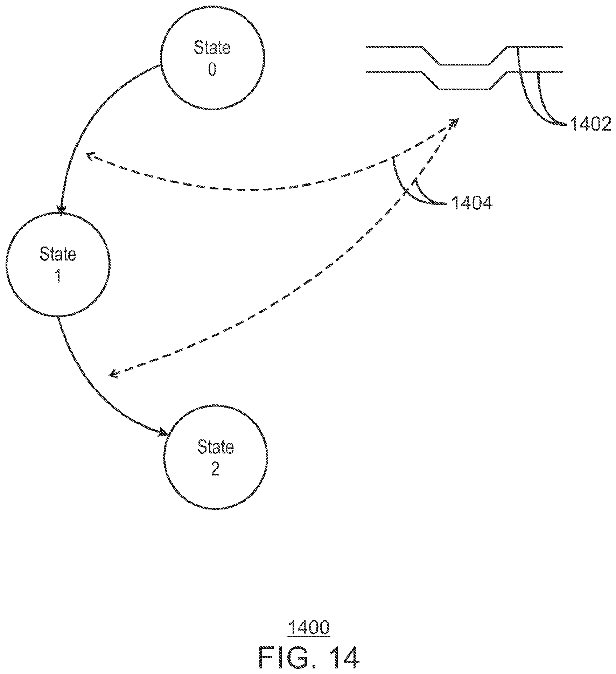

Fig. 14 is a diagram illustrating transitions of a Link Training and Status State Machine (LTSSM) indicated on the serial sideband link. As discussed above with regard to Fig. 12, state changes in the LTSSM may be communicated via transitions on the serial sideband link. Each time the LTSSM state changes, an asynchronous handshake may occur at the serial sideband link, as indicated at 1402 and 1404. This may enable deducing transitions into and out of low power states when PCIe retimers are not as robust.

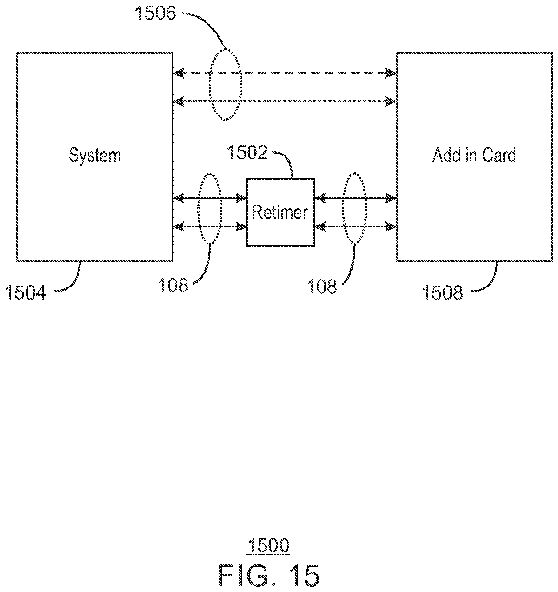

Fig. 15 is diagram illustrating a retimer within a serial sideband link that is configurable by the serial sideband link. A retimer 1502 may not be visible to software within a computing system 1504. In other words, software may only recognize a virtual link 1506 between the computing system 1504 and an AIC 1508 without the retimer 1502 in the middle. However, the retimer 1502 is visible to the serial sideband link 108, and therefore, may configure the retimer 1502.

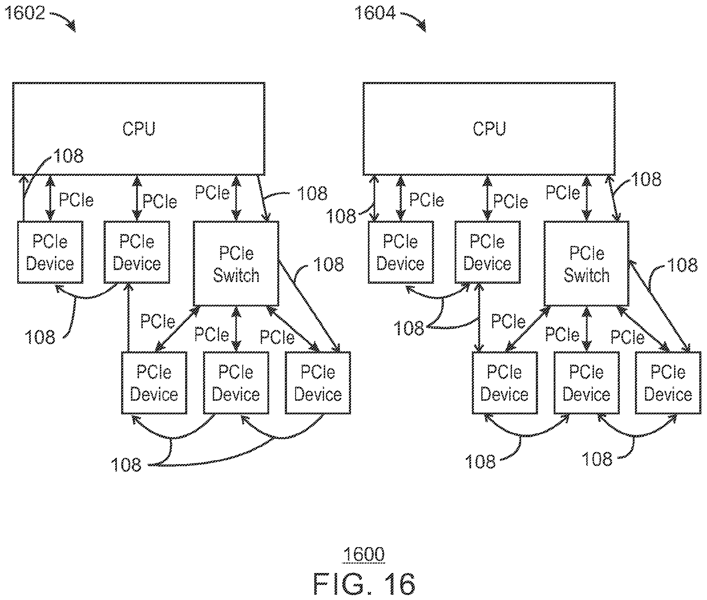

Fig. 16 are diagrams illustrating various ways in which the serial sideband signaling may be arranged in a daisy chain fashion. A daisy chain, as referred to herein is wiring scheme wherein multiple devices are wired together in sequence or in a ring. For example, at 1602, serial sideband links are configurable to be daisy chained in a unidirectional ring. At 1604, serial sideband links are configurable to be daisy chained in bidirectional ring. In this manner, the serial sideband link may be enumerated, and debug testability in complex system hierarchies may be enabled.

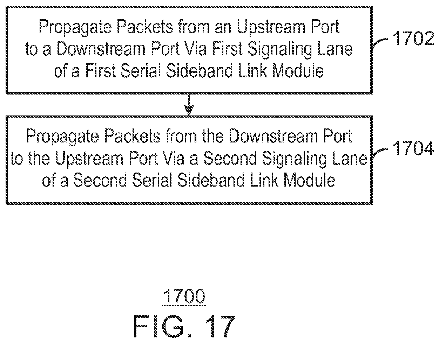

Fig. 17 is a block diagram illustrating a method of serial sideband link signaling. The method 1700 may include propagating, at block 1702, packets from an upstream port to a downstream port via first signaling lane of a first serial sideband link module. At block 1704, packets are propagated from the downstream port to the upstream port via a second signaling lane of a second serial sideband link module.

Other method steps are considered. For example, the method 1700 may include initiating an asynchronous handshake via the first serial sideband link module, the second sideband link module, or both sideband link modules to wake up a serial sideband link, and performing an asynchronous handshake each time a state change is indicated for a main signaling link with which the sideband signaling is associated. The method 1700 may also include encoding the packets propagate using pulse width modulation (PWM) without propagation of a separate clock signal. In some cases, the method 1700 includes interfacing the serial sideband link modules with one or more sideband link input/output (I/O) technologies.

**Claims**

1. An apparatus for sideband signaling, comprising:

   a first serial sideband link module (110) to propagate packets from an upstream port (102) to a downstream port (104) via a first signaling lane (114);
   a second serial sideband link module (112) to propagate packets from the downstream port (104) to the upstream port (102) via a second signaling lane (116), **characterized in that**:
   each of the first serial sideband link module (110) and the second sideband link module (112) comprise a 16-bit register to identify support for a plurality of profiles to enable operation across various sideband link I/O technologies.

2. The apparatus for sideband signaling of claim 1, wherein an asynchronous handshake is initiated by the first serial sideband link module (110), the second serial sideband link module (112), or both sideband link modules to wake up a serial sideband link.

3. The apparatus for sideband signaling of any combination of claims 1 -2, wherein the packets propagate using pulse width modulation (PWM) encoding without propagation of a separate clock signal.

4. The apparatus for sideband signaling of any combination of claims 1 -2, wherein the sideband signaling is asynchronous.

5. The apparatus for sideband signaling of any combination of claims 1 -2, wherein the signaling lanes are connected to Universal Serial Bus (USB) future use pins.

6. The apparatus for sideband signaling of any combination of claims 1 -2, wherein the apparatus is to connect to one or more apparatuses for sideband signaling in a daisy chain configuration.

7. The apparatus for sideband signaling of any combination of claims 1 -2, wherein an asynchronous handshake received at the second serial sideband link module (112) indicates a presence of a logical entity at another port.

8. The apparatus for sideband signaling of any combination of claims 1 -2, wherein the sideband link signaling is communicated over a connector comprising pins associated with the sideband link that are shorter than other pins of the connector.

9. The apparatus for sideband signaling of any combination of claims 1-2, wherein the sideband link modules are to communicate state changes for a main signaling link with which the sideband signaling is associated by performing an asynchronous handshake each time a state change is indicated.

10. A method for sideband signaling, the method comprising:

interfacing serial sideband link modules with one or more sideband link input/output (I/O) technologies;
propagating packets from an upstream port (102) to a downstream port (104) via first signaling lane (114) of a first serial sideband link module (110);
propagating packets from the downstream port (104) to the upstream port (102) via a second signaling lane (116) of a second serial sideband link module (112), **characterized in that**:
each of the first serial sideband link module (110) and the second sideband link module (112) comprise a 16-bit register to identify support for a plurality of profiles to enable operation across various sideband link I/O technologies.

11. The method for sideband signaling of claim 11, comprising initiating an asynchronous handshake via the first serial sideband link module, the second sideband link module, or both sideband link modules to wake up a serial sideband link.

12. The method for sideband signaling of any combination of claims 11 - 12, comprising encoding the packets propagate using pulse width modulation (PWM) without propagation of a separate clock signal.

13. The method for sideband signaling of any combination of claims 11 - 12, comprising connecting each of the signaling lanes to one or more additional sideband signaling in a daisy chain configuration.

**Patentansprüche**

1. Vorrichtung für eine Seitenbandsignalisierung, die Folgendes umfasst:

ein erstes serielles Seitenbandverbindungsmodul (110), um Pakete von einem vorgelagerten Anschluss (102) an einen nachgelagerten Anschluss (104) über eine erste Signalisierungsspur (114) zu verbreiten;
ein zweites serielles Seitenbandverbindungsmodul (112), um Pakete von dem nachgelagerten Anschluss (104) an den vorgelagerten Anschluss (102) über eine zweite Signalisierungsspur (116) zu verbreiten,
**dadurch gekennzeichnet, dass**:
jedes des ersten seriellen Seitenbandverbindungsmoduls (110) und des zweiten Seitenbandverbindungsmoduls (112) ein 16-Bit-Register umfasst, um eine Unterstützung für mehrere Profile zu identifizieren, um einen Betrieb über verschiedene Seitenbandverbindungs-I/O-Technologien zu ermöglichen.

2. Vorrichtung für eine Seitenbandsignalisierung nach Anspruch 1, wobei ein nicht synchroner Handshake durch das erste serielle Seitenbandverbindungsmodul (110), das zweite serielle Seitenbandverbindungsmodul (112) oder beide Seitenbandverbindungsmodule eingeleitet wird, um eine serielle Seitenbandverbindung aufzuwecken.

3. Vorrichtung für eine Seitenbandsignalisierung nach einer Kombination der Ansprüche 1-2, wobei sich die Pakete unter Verwendung einer Impulsbreitenmodulationscodierung (PWM-Codierung) ohne die Verbreitung eines getrennten Taktsignals verbreiten.

4. Vorrichtung für eine Seitenbandsignalisierung nach einer Kombination der Ansprüche 1-2, wobei die Seitenbandsignalisierung nicht synchron ist.

**5.** Vorrichtung für eine Seitenbandsignalisierung nach einer Kombination der Ansprüche 1-2, wobei die Signalisierungsspuren mit Kontakten für eine zukünftige Verwendung durch einen universellen seriellen Bus (USB) verbunden sind.

**6.** Vorrichtung für eine Seitenbandsignalisierung nach einer Kombination der Ansprüche 1-2, wobei sich die Vorrichtung mit einer oder mehreren Vorrichtungen für eine Seitenbandsignalisierung in einer Verkettungskonfiguration verbindet.

**7.** Vorrichtung für eine Seitenbandsignalisierung nach einer Kombination der Ansprüche 1-2, wobei ein nicht synchroner Handshake, der an dem zweiten seriellen Seitenbandverbindungsmodul (112) empfangen wird, ein Vorhandensein einer logischen Entität an einem anderen Anschluss angibt.

**8.** Vorrichtung für eine Seitenbandsignalisierung einer Kombination der Ansprüche 1-2, wobei die Seitenbandverbindungssignalisierung über ein Verbindungselement kommuniziert wird, das Kontakte umfasst, die der Seitenbandverbindung zugeordnet sind und die kürzer als andere Kontakte des Verbindungselements sind.

**9.** Vorrichtung für eine Seitenbandsignalisierung nach einer Kombination der Ansprüche 1-2, wobei die Seitenbandverbindungsmodule Zustandsänderungen für eine Hauptsignalisierungsverbindung, die der Seitenbandsignalisierung zugeordnet ist, durch Ausführen eines nicht synchronen Handshakes jedes Mal dann, wenn eine Zustandsänderung angegeben wird, kommunizieren.

**10.** Verfahren für eine Seitenbandsignalisierung, wobei das Verfahren Folgendes umfasst:

Verbinden über eine Schnittstelle von seriellen Seitenbandverbindungsmodulen mit einer oder mehreren Seitenbandverbindungs-Eingabe/Ausgabe-Technologien (Seitenbandverbindungs-I/O-Technologien);
Verbreiten von Paketen von einem vorgelagerten Anschluss (102) an einen nachgelagerten Anschluss (104) über eine erste Signalisierungsspur (114) eines ersten seriellen Seitenbandverbindungsmoduls (110);
Verbreiten von Pakten von dem nachgelagerten Anschluss (104) an den vorgelagerten Anschluss (102) über eine zweite Signalisierungsspur (116) eines zweiten seriellen Seitenbandverbindungsmoduls (112), **dadurch gekennzeichnet, dass**:
jedes des ersten seriellen Seitenbandverbindungsmoduls (110) und des zweiten Seitenbandverbindungsmoduls (112) ein 16-Bit-Register umfasst, um eine Unterstützung für mehrere Profile zu identifizieren, um einen Betrieb über verschiedene Seitenbandverbindungs-I/O-Technologien zu ermöglichen.

**11.** Verfahren für eine Seitenbandsignalisierung nach Anspruch 11, das umfasst, einen nicht synchronen Handshake über das erste serielle Seitenbandverbindungsmodul, das zweite Seitenbandverbindungsmodul oder beide Seitenbandverbindungsmodule einzuleiten, um eine serielle Seitenbandverbindung aufzuwecken.

**12.** Verfahren für eine Seitenbandsignalisierung nach einer Kombination der Ansprüche 11-12, das umfasst, die sich verbreitenden Pakete unter Verwendung einer Impulsbreitenmodulation (PWM) ohne eine Verbreitung eines getrennten Taktsignals zu codieren.

**13.** Verfahren für eine Seitenbandsignalisierung nach einer Kombination der Ansprüche 11-12, das umfasst, jede der Signalisierungsspuren mit einer oder mehreren zusätzlichen Seitenbandsignalisierungen in einer Verkettungskonfiguration zu verbinden.

**Revendications**

**1.** Appareil de signalisation de bande latérale, comprenant :

un premier module de liaison de bande latérale série (110) pour propager des paquets d'un port amont (102) à un port aval (104) par l'intermédiaire d'une première ligne de signalisation (114) ;
un second module de liaison de bande latérale série (112) pour propager des paquets du port aval (104) au port amont (102) par l'intermédiaire d'une seconde ligne de signalisation (116),
**caractérisé en ce que**
chacun du premier module de liaison de bande latérale série (110) et du second module de liaison de bande latérale série (112) comprend un registre à 16 bits pour identifier une prise en charge d'une pluralité de profils afin de permettre un fonctionnement sur diverses technologies d'E/S par liaison de bande latérale.

2. Appareil de signalisation de bande latérale selon la revendication 1, dans lequel
un établissement de liaison asynchrone est lancé par le premier module de liaison de bande latérale série (110), le second module de liaison de bande latérale série (112), ou les deux modules de liaison de bande latérale pour réveiller une liaison de bande latérale série.

3. Appareil de signalisation de bande latérale selon n'importe quelle combinaison des revendications 1 et 2, dans lequel les paquets se propagent par codage par modulation de largeur d'impulsion (PWM) sans propagation d'un signal d'horloge séparé.

4. Appareil de signalisation de bande latérale selon n'importe quelle combinaison des revendications 1 et 2, dans lequel la signalisation de bande latérale est asynchrone.

5. Appareil de signalisation de bande latérale selon n'importe quelle combinaison des revendications 1 et 2, dans lequel les lignes de signalisation sont connectées à des broches d'utilisation future USB (Universal Serial Bus).

6. Appareil de signalisation de bande latérale selon n'importe quelle combinaison des revendications 1 et 2, l'appareil étant destiné à être connecté à un ou plusieurs appareils de signalisation de bande latérale dans une configuration en guirlande.

7. Appareil de signalisation de bande latérale selon n'importe quelle combinaison des revendications 1 et 2, dans lequel un établissement de liaison asynchrone reçu au niveau du second module de liaison de bande latérale série (112) indique une présence d'une entité logique au niveau d'un autre port.

8. Appareil de signalisation de bande latérale selon n'importe quelle combinaison des revendications 1 et 2, dans lequel la signalisation de liaison de bande latérale est communiquée sur un connecteur comprenant des broches associées à la liaison de bande latérale qui sont plus courtes que d'autres broches du connecteur.

9. Appareil de signalisation de bande latérale selon n'importe quelle combinaison des revendications 1 et 2, dans lequel les modules de liaison de bande latérale sont destinés à communiquer des changements d'état d'une ligne de liaison de signalisation principale à laquelle la signalisation de bande latérale est associée en réalisant un établissement de liaison asynchrone chaque fois qu'un changement d'état est indiqué.

10. Procédé de signalisation de bande latérale, le procédé comprenant :

l'interfaçage de modules de liaison de bande latérale série avec une ou plusieurs technologies d'entrée/sortie (E/S) de liaison de bande latérale ;
la propagation de paquets d'un port amont (102) à un port aval (104) par l'intermédiaire d'une première ligne de signalisation (114) d'un premier module de liaison de bande latérale série (110) ;
la propagation de paquets du port aval (104) au port amont (102) par l'intermédiaire d'une seconde ligne de signalisation (116) d'un second module de liaison de bande latérale série (112), **caractérisé en ce que** chacun du premier module de liaison de bande latérale série (110) et du second module de liaison de bande latérale série (112) comprend un registre à 16 bits pour identifier la prise en charge d'une pluralité de profils afin de permettre un fonctionnement sur diverses technologies d'E/S de liaison de bande latérale.

11. Procédé de signalisation de bande latérale selon la revendication 11, comprenant le lancement d'un établissement de liaison asynchrone par l'intermédiaire du premier module de liaison de bande latérale série, du second module de liaison de bande latérale série, ou des deux modules de liaison de bande latérale pour réveiller une liaison de bande latérale série.

12. Procédé de signalisation de bande latérale selon n'importe quelle combinaison des revendications 11 et 12, comprenant le codage des paquets propagés par modulation de largeur d'impulsion (PWM) sans propagation d'un signal d'horloge séparé.

13. Procédé de signalisation de bande latérale selon n'importe quelle combinaison des revendications 11 et 12, comprenant la connexion de chacune des lignes de signalisation à une signalisation d'une ou plusieurs bandes latérales supplémentaires dans une configuration en guirlande.

102

Upstream Port

108

Serial Sideband
Link Module

110

116

106

114

Serial Sideband
Link Module

112

Downstream Port

104

<u>100</u>

FIG. 1

FIG. 2

200

302
Initiator

304
Responder

LOCK_PAT
8'hFE
306

Either Profile Bits
or Sideband Bits
308

T$_{MAX\_RESP}$    T$_{MIN\_ACTIVE}$    T$_{IDLE\_MAX}$

102
Upstream
Device

104
Downstream
Device

LOCK_PAT
8'hFE
310

Either Profile Bits
or Sideband Bits
312

T$_{MIN\_ACTIVE}$    T$_{IDLE\_MAX}$

300

FIG. 3

EP 3 191 969 B1

402 →

| 1:0 | 15:0 | 0:0 | 1:0 |
|-----|------|-----|-----|
| SOP | Profile ID | P | EOP |

404 →

| 1:0 | N-1:0 | 0:0 | 1:0 |
|-----|-------|-----|-----|
| SOP | Variable Data | P | EOP |

406 →

| 1:0 | 15:0 | N-1:0 | 0:0 | 1:0 |
|-----|------|-------|-----|-----|
| SOP | Profile ID | Variable Data | P | EOP |

408 →

| 1:0 | 3'b111 | 0:0 | 1:0 |
|-----|--------|-----|-----|
| SOP | ACK | P | EOP |

410 →

| 1:0 | 3'b000 | 0:0 | 1:0 |
|-----|--------|-----|-----|
| SOP | NAK | P | EOP |

400

FIG. 4

**FIG. 5**
500

602

| SOP | OBFF1 | OBFF0 | CLKREQ# | WAKE# | PERST# | P | EOP |

600

FIG. 6

104
Downstream Port

102
Upstream Port

Profile Negotiation Packet
702

704
ACK

706
Last Profile Negotiation Packet

708
ACK

710
Profile Negotiation Packet

712
ACK

714
Last Profile Negotiation Packet

700

FIG. 7A

104

Downstream
Port

102

Upstream
Port

718

Downstream
Port
Resolves
and Makes
the
Decision

716

ACK

Profile
Negotiation
Packet

720

724

ACK

722

Last Profile
Negotiation
Packet

726

ACK

Profile Negotiation Complete

700

FIG. 7B

802

804

Idle Low | START_SYM 2'b01 | | | | | • • • | STOP_SYM 2'b01

b0   b1   b2   b3   b4-bn-1

800

FIG. 8

104

Downstream
Port

102

Upstream
Port

Packet 0

902

904

NAK

Packet 0

906

908

ACK

900
FIG. 9

FIG. 10

Binary 1
TPWM_LOW<TPWM_HIGH

1102

500mv

250mv

0V

TPWM_LOW

TPWM_HIGH

Binary 0
TPWM_LOW>TPWM_HIGH

1104

500mv

250mv

0V

TPWM_LOW

TPWM_HIGH

1100

FIG. 11

1224

Root Complex

1208

1206

1226

1228

1202

1220

1222

1210

1212

Endpoint 1

1220

Endpoint 2

1218

1204

Endpoint 4

1214

Endpoint 3

1216

1200

FIG. 12

1302

Add in Card

1310

1304 — 1304

Pull Up

1308

Hot Plug
Logic

1312 —

1300

FIG. 13

State
0

State
1

State
2

1402

1404

<u>1400</u>
FIG. 14

1500
FIG. 15

FIG. 16

1600

Propagate Packets from an Upstream Port
to a Downstream Port Via First Signaling Lane
of a First Serial Sideband Link Module

—1702

Propagate Packets from the Downstream Port
to the Upstream Port Via a Second Signaling Lane
of a Second Serial Sideband Link Module

—1704

1700

FIG. 17